# EUROPÄISCHE PATENTSCHRIFT

(11) **EP 1 894 646 B1**
(45) Veröffentlichungstag und Bekanntmachung des Hinweises auf die Patenterteilung: **17.10.2012**
(21) Anmeldenummer: 06090152.7
(22) Anmeldetag: 01.09.2006
(51) Int. Cl.: B21K 1/30

(54) **Verfahren und Vorrichtung zum Herstellen einer Verzahnung an einem umgeformten und feingeschnittenen dreidimensionalen Körper**
Method and device for producing a spline on a formed and precision blanked three dimensional body
Procédé et dispositif de fabrication d'une denture sur un corps tridimensionnel déformé et estampé de haute précision

(43) Veröffentlichungstag der Anmeldung: 05.03.2008
(73) Patentinhaber: Feintool Intellectual Property AG, 3250 Lyss (CH)
(72) Erfinder: Frauchiger, Paul, Cincinnati, Ohio 45236 (US)
(74) Vertreter: Hannig, Wolf-Dieter

(56) Entgegenhaltungen:
- EP-A2- 1 297 911
- WO-A2-2004/094083
- DE-A1- 19 801 431
- JP-A- 57 139 432
- US-A- 5 762 439

## Beschreibung

Die Erfindung betrifft ein Verfahren gemäß Oberbegriff des Anspruchs 1 zum Herstellen einer Verzahnung an einem umgeformten und feingeschnittenen dreidimensionalen Körper, insbesondere einem aus einem Bandstreifen gefertigten Beschlag für Autositzkomponenten o. dgl., bei dem der Bandstreifen zu einem topfartigen Körper mit in dessen Körperbasis gelegenen Innenformen und einem im wesentlichen gleichmäßig gekrümmt verlaufenden Rand in einem Werkzeug umgeformt, feingeschnitten und anschließend eine sich radial nach innen in den Körper erstreckende Verzahnung in den Rand eingearbeitet wird.

Die Erfindung betrifft ferner eine Vorrichtung gemäß Oberbegriff des Anspruchs 5 zum Herstellen einer Verzahnung an einem umgeformten und feingeschnittenen dreidimensionalen topfartigen Körper, insbesondere Gelenkbeschlag für Autositzkomponenten o. dgl., mit einem Werkzeug zum Verzahnen eines im wesentlichen gleichmäßig gekrümmt verlaufenden Randes eines mit in seiner Körperbasis gelegene Innenformen versehenen topfartigen Körpers, wobei sich die Zähne der Verzahnung radial in das Innere des topfartigen Körpers erstrecken, in dem der dreidimensionale Körper zwischen einer Grundplatte und einer Führungsplatte eingespannt ist.

Ein solches Verfahren und eine solche Vorrichtung sind aus der US 5 762 439 bekannt.

### Stand der Technik

Sitzverstellungskomponenten, beispielsweise feste und schwenkbewegliche Gelenkteile von Gelenkbeschlägen, werden bekanntlich durch Umformen und Feinstanzen oder -schneiden in der für den endgültigen Einsatzzweck sehr hohen Maßhaltigkeit hergestellt. Diese Gelenkteile besitzen Drehbewegungen übertragende Innen- oder Außenverzahnungen, die als Ausdrückung einstückig mit dem entsprechenden Gelenkteil ausgebildet (DE 32 44 399 C2, DE 28 34 492 C2, DE 32 27 222 C1) sind.

Es ist üblich, Verzahnungen an Gelenkbeschlägen durch Feinschneiden herzustellen (DE 32 44 399 C2, DE 198 01 431 A1). Diese bekannten Gelenkbeschläge bestehen durchweg aus scheibenförmigen Beschlagteilen. Sobald jedoch Gelenkbeschläge eine rotationssymmetrische Körperform annehmen, also dreidimensional sind, lassen sich Verzahnungen bisher nicht durch das übliche Feinschneiden wirtschaftlich erzeugen, weil der beim Feinschneiden entstehende Grat durch die dreidimensionalen Übergänge im Bereich der Feinschneidfläche auch nicht mehr mit einer nachgeschalteten zweiten Bearbeitungsstufe entfernbar sind. Deshalb werden die Innenverzahnungen an dreidimensionalen Gelenkbeschlägen kaltumgeformt (siehe beispielsweise der DE 197 50 184 A1), was jedoch mit dem Nachteil einhergeht, dass die Maßhaltigkeit der Zähne beeinträchtigt wird, weil die Zahnspitzen immer abgerundet sind. Des weiteren ist das Kaltumformen mit dem Nachteil verbunden, dass eine zusätzliche Wärmebehandlung wie beispielsweise ein Zwischenglühen der kaltumgeformten Verzahnung notwendig wird, was Zeitverlust und Erhöhung der Herstellungskosten bedeutet.

### Aufgabenstellung

Bei diesem Stand der Technik liegt der Erfindung die Aufgabe zugrunde, ein Verfahren und eine Vorrichtung zum Herstellen einer Verzahnung an einem umgeformten und feingeschnittenen topfartigen Körper derart zu verbessern, dass die Herstellung von Verzahnungen auch bei rotationssymmetrischen dreidimensionalen Körpern wie Gelenkbeschläge bei gleichzeitiger Erhöhung der Maßhaltigkeit der Verzahnung wirtschaftlich anwendbar wird, wobei die Prozesssicherheit durch den Wegfall der Wärmebehandlung erhöht und das Werkzeug kompakter ausgeführt werden kann.

Diese Aufgabe wird durch ein Verfahren der eingangs genannten Gattung mit den kennzeichnenden Merkmalen des Anspruchs 1 und durch eine Vorrichtung mit den kennzeichnenden Merkmalen des Anspruchs 3 gelöst.

Vorteilhafte Ausgestaltungen des Verfahrens und des Werkzeugs sind den Unteransprüchen entnehmbar.

Die erfindungsgemäße Lösung zeichnet sich dadurch aus, dass Verzahnungen, beispielsweise Innenverzahnungen an dreidimensionalen rotationssymmetrischen Körpern, durch das Feinschneiden bzw. Schaben mit einer höheren Maßhaltigkeit und Wirtschaftlichkeit herstellbar sind.

Von besonderer Bedeutung ist, dass eine 100%-ige Glattschnittfläche ohne eine weiteren Bearbeitungsprozess möglich wird, weil der beim Schneiden oder Schaben entstehende Grat bzw. Schabespan in einer der Verzahnung zugeordneten Einsenkung im Körpergrund des topfartigen Körpers definiert verprägt wird.

Die Zähne der Verzahnung sind bis in ihre Spitzen mit Material ausgefüllt, wodurch die Maßhaltigkeit der Verzahnung erheblich verbessert wird.

Der Wegfall der Wärmebehandlung führt neben dem Effekt der Einsparung einer ganzen Bearbeitungsstufe auch zu dem außerordentlichen Vorteil, dass Fehlerquellen in der Prozessführung ausgeschaltet werden und damit die Prozesssicherheit erhöht werden kann.

Die erfindungsgemäße Vorrichtung kann in den Herstellprozess von Gelenkbeschlägen durch Feinschneid- und Stanzvorgänge sowie Umformoperationen integriert werden. Dadurch, dass die Herstellung der Innenverzahnung mittels Feinschneid- oder Schaboperationen möglich wird, kann das Werkzeug kompakter aufgebaut werden.

Weitere Vorteile und Einzelheiten ergeben sich aus der nachfolgenden Beschreibung unter Bezugnahme auf die beigefügten Zeichnungen.

### Ausführungsbeispiel

Die Erfindung soll nachstehend an einem Ausführungsbeispiel näher erläutert werden.
Es zeigt

Fig. 1 einen Schnitt durch einen üblichen dreidimensionalen Gelenkbeschlages mit Innenverzahnung, die nach dem erfindungsgemäßen Verfahren hergestellt wurde,

Fig. 2 eine Prinzipdarstellung der erfindungsgemäßen Vorrichtung,

Fig. 3 eine schematische Darstellung des Feinschneidens zu Beginn des erfindungsgemäßen Verfahrens,

Fig. 4 eine schematische Darstellung des Feinschneidens am Ende des erfindungsgemäßen Verfahrens.

Mit dem erfindungsgemäßen Verfahren soll ein dreidimensionaler topfartiger Körper **1** (Gelenkbeschlag) mit einer Innenverzahnung **2** hergestellt werden.

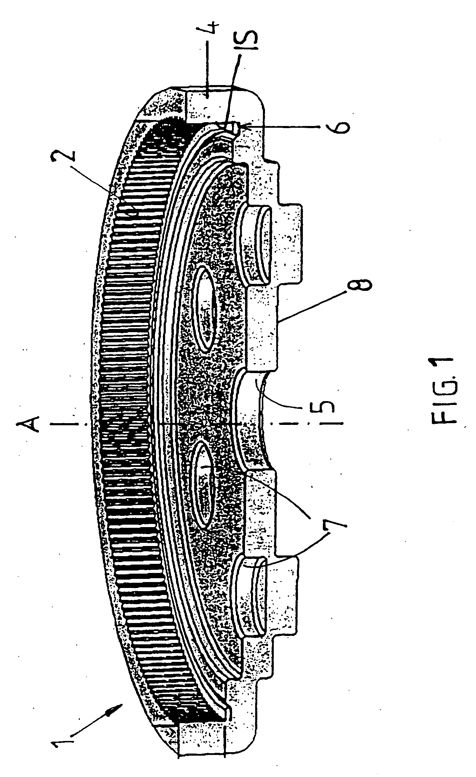

Die Fig. 1 zeigt den prinzipiellen Aufbau des erfindungsgemäßen Vorrichtung **3,** mit dem das erfindungsgemäße Verfahren ausgeführt wird.

Im fertig gestellten Zustand weist der topfartige Körper **1** einen umlaufenden Rand **4,** eine mittige Bohrung **5** für die Aufnahme der Gelenkachse **A,** eine unmittelbar am Rand **4** innen angrenzende, umlaufende abgeprägte flächige Einsenkung **6,** und ausgedrückte Vertiefungen **7** im Grundkörper **8** des Körpers **1** auf, die zur Befestigung am Gestell der Sitzlehne beispielsweise durch Verschweißen dienen.

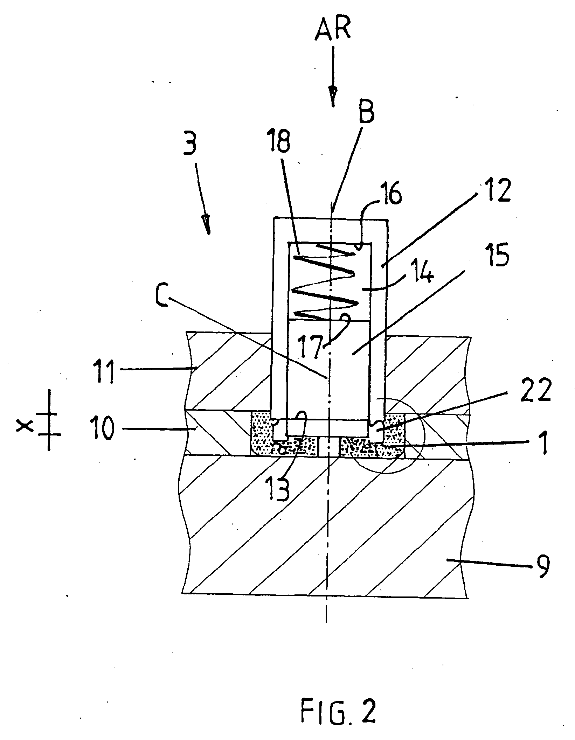

Die erfindungsgemäße Vorrichtung **3** weist - wie Fig. 2 zeigt - eine Grundplatte **9** auf, auf der der topfartige Körper **1** festliegt. Der topfartige Körper **1** ist von einer Distanzplatte **10** gehalten, deren Höhe der Höhe des Körpers **1** entspricht. Auf dem umlaufenden Rand **4** des Körpers **1** liegt eine Führungsplatte **11** auf, die den Körper **1** zwischen Grundplatte **9** und Führungsplatte **11** fest verspannt.

Der Feinschneidstempel **12** gehört zu einem nicht gezeigten Feinschneidwerkzeug. Die Arbeitsrichtung des Feinschneidstempels **12** ist mit **AR** bezeichnet.

In dem dem Körper **1** zugewandeten Ende **13** des Feinschneidstempels **12** ist ein Hohlraum **14** ausgebildet, in dem ein Pilotstempel **15** gleitend angeordnet ist, dessen Achse **C** auf der Achse **B** des Feinschneidstempels **12** liegt. Dieser Pilotstempel **15** wird durch eine zwischen dem bodenseitigen Ende **16** des Hohlraumes **14** und dem dem Körper **1** abgewandten Ende **17** des Pilotstempels **15** angeordnete Druckfeder **18** um einen gewissen Betrag **X** aus dem Hohlraum **14** gedrückt.

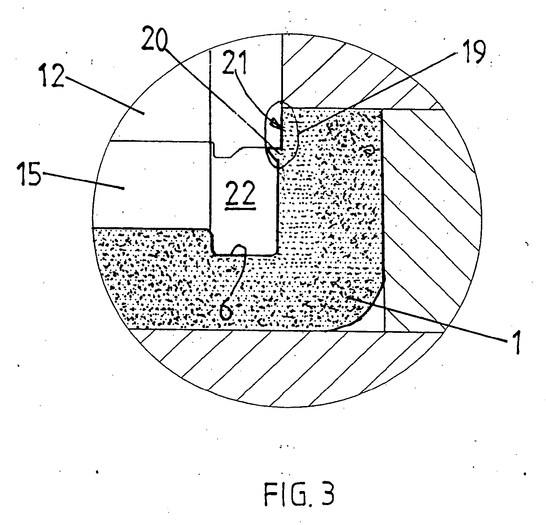

Sobald sich der von der Führungsplatte **11** geführte Feinschneidstempel **12** in Arbeitsrichtung **AR** bewegt, beginnt der Feinschneidstempel **12** an der Innenseite **IS** des umlaufenden Randes **4** eine Zahnpartie **19** anzuschneiden und schiebt einen Grat **20** an der Schneidfläche **21** entlang der Innenseite **IS** Randes **4** vor sich her (siehe Fig. 3). Die Druckfeder **18** drückt dabei den Pilotstempel **15** um den Betrag **X** aus dem Hohlraum **14** des Feinschneidstempel **12** heraus, so dass der Pilotstempel **15** auf dem Grundkörper **8** des Körpers **1** aufsetzt und zwischen der Schneidfläche **21** an der Innenseite **IS** in Flucht zur Einsenkung **6** einen Kanal **22** schafft. Der Grat **20** verschiebt sich bei Abwärtsbewegung des Feinschneidstempels **12** zielgerichtet in diesem Kanal **22** abwärts bis in die Einsenkung **6** hinein. Für den Fall, dass anstelle eines Feinschneidstempels **12** ein nicht dargestellter Schabestempel eingesetzt wird, dient der Kanal **22** zur zielgerichteten Ableitung bzw. Ablenkung eventuell entstehender Schabespäne in die Einsenkung **6** und verhindert zugleich, dass Schabespäne durch die Bohrung **5** nach außen gelangen.

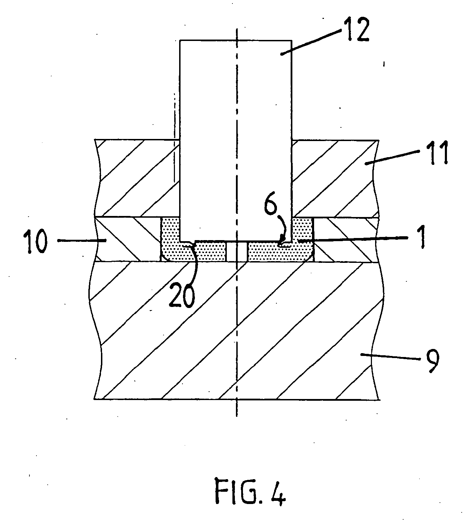

Fig. 4 zeigt die Endposition des Feinschneidstempels **12,** in der der Feinschneidstempel **12** auf dem Grundkörper **8** aufgesetzt und den Grat **20** in der Einsenkung **6** verprägt hat. Der Pilotstempel **15** ist in dieser Lage in den Hohlraum **14** entgegen der Druckfeder **18** zurückgedrückt.
Wird die Verzahnung am Rand **4** des topfartigen Körpers **1** erzeugt, kommt mindestens ein zweistufiger Schabevorgang zum Einsatz, in dem ein Schabestempel die Zahnpartie **19** in der Innenseite **IS** herausarbeitet. Die beim Schaben entstehenden Späne werden durch den Kanal **22** in die Einsenkung **6** abgeführt und vom Schabestempel dort verprägt, sobald letzter auf der Körperbasis **8** des topfartigen Körpers **1** aufsetzt.

Bezugszeichenliste
- topfartiger Körper (Gelenkbeschlag): 1
- Innenverzahnung: 2
- Vorrichtung: 3
- Rand von 1: 4
- Bohrung in 1: 5
- Einsenkung in 1: 6
- Vertiefung: 7
- Körperbasis von 1: 8
- Grundplatte von 3: 9
- Distanzplatte von 3: 10
- Führungsplatte von 3: 11
- Feinschneidstempel: 12
- Ende von 12: 13
- Hohlraum: 14
- Pilotstempel: 15
- bodenseitiges Ende von 14: 16
- abgewandtes Ende von 12: 17
- Druckfeder: 18
- Zahnpartie: 19
- Grat: 20
- Schneidfläche: 21
- Kanal: 22
- Achse von 1: A
- Arbeitsrichtung von 12: AR
- Achse von 12: B
- Achse von 15: C
- Auslenkbetrag: X
- Innenseite von 4: IS

## Patentansprüche

1. Verfahren zum Herstellen einer Verzahnung an einem umgeformten und feingeschnittenen dreidimensionalen Körper, insbesondere einem aus einem Bandstreifen gefertigten Beschlag für Autositzkomponenten o. dgl., bei dem der Bandstreifen zu einem topfartigen Körper mit in dessen Körperbasis gelegenen Innenformen und einem im wesentlichen gleichmäßig gekrümmt verlaufenden Rand in einem Werkzeug umgeformt, feingeschnitten und anschließend eine sich radial nach innen in den Körper erstreckende Verzahnung in den Rand eingearbeitet wird, **dadurch gekennzeichnet, dass** die Verzahnung im Rand des topfartigen Körpers ausschließlich durch ein Anschneiden oder Schaben mittels Feinschneidstempel oder Schabemittel erzeugt und ein beim Schneiden oder Schaben entstehender Grat bzw. Schabespan in einer der Verzahnung zugeordneten Einsenkung im Körpergrund des topfartigen Körpers definiert verprägt wird.

2. Verfahren nach Anspruch 1, **dadurch gekennzeichnet, dass** die Körperbasis des topfartigen Körpers vor dem Feinschneiden oder Schaben durch ein dem Feinschneidstempel oder Schabemittel zeitlich voreilenden Pilotstempel fixiert und der Grat bzw. die Schabespäne in die Einsenkung in eine definierter Lage zum Verprägen gelenkt werden.

3. Verfahren nach Anspruch 1, **dadurch gekennzeichnet, dass** das Schaben als ein mindestens zweistufiger Vorgang durchgeführt wird.

4. Verfahren nach Anspruch 1, **dadurch gekennzeichnet, dass** das Feinschneiden in einer Kombination mit dem Schaben durchgeführt wird.

5. Vorrichtung zum Herstellen einer Verzahnung an einem umgeformten und feingeschnittenen dreidimensionalen topfartigen Körper, insbesondere Gelenkbeschlag für Autositzkomponenten o. dgl. nach Anspruch 1, mit einem Werkzeug zum Verzahnen eines im wesentlichen gleichmäßig gekrümmt verlaufenden Randes eines mit in seiner Körperbasis angeordneten Innenformen versehenen topfartigen Körpers, wobei sich die Zähne der Verzahnung radial in das Innere des topfartigen Körpers erstrecken, in dem der dreidimensionale Körper zwischen einer Grundplatte und einer Führungsplatte eingespannt ist, **dadurch gekennzeichnet, dass** das Werkzeug einen Stempel **(12)** zum Feinschneiden oder Schaben umfasst, in dem ein Hohlraum **(14)** vorgesehen ist, in welchem ein in Arbeitsrichtung **(AR)** des Stempels **(12)** wirkender Pilotstempel **(15)** zum Andrücken an die Körperbasis **(8)** des topfartigen Körpers **(1)** gleitverschieblich angeordnet ist, der mit dem Stempel **(12)** durch Federmittel **(18)** so gekoppelt ist, dass der Pilotstempel **(15)** bei seiner Abwärtsbewegung dem Stempel **(12)** voreilt und zwischen der angeschnittenen oder geschabten Fläche **(21)** der Innenverzahnung **(2)** und dem Pilotstempel **(15)** ein Kanal **(22)** zum Abführen von reinschneidgiat **(20)** oder Schabespäne in die Einsenkung **(6)** des Körpers **(1)** entsteht, wobei der Stempel **(12)** bei Erreichen seiner unteren Endlage den Grat **(20)** und die Späne in der Einsenkung **(6)** fixiert und verprägt.

6. Vorrichtung nach Anspruch 5, **dadurch gekennzeichnet, dass** das Federmittel (18) eine Druckfeder ist.

7. Vorrichtung nach Anspruch 5, **dadurch gekennzeichnet, dass** zwischen Grundplatte **(9)** und Führungsplatte **(11)** eine Distanzplatte **(10)** angeordnet ist, die der Höhe des topfartigen Körpers **(1)** entspricht.

8. Vorrichtung nach Anspruch 5, **dadurch gekennzeichnet, dass** Stempel **(12)** und Pilotstempel **(15)** eine gemeinsame Achse aufweisen.

## Claims

1. Method for fabricating a toothing at a three-dimensional body produced by forming and fine blanking, especially an attachment for car seat components or the like produced out of a flat strip, wherein the flat strip by forming and fine blanking in a tool is formed into a pot-shaped body with placed in the base of the body inner forms and a substantially evenly curved edge and afterwards into the edge is fabricated a toothing radially extending to the inner side of the body, **characterized in that** the toothing in the edge of the pot-shaped body is exclusively produced by cutting or shaving with a fine blanking die or a shaving device and wherein a burr or shaving chips developing during cutting or shaving is pressed into an indentation allocated to the toothing.

2. Method according to claim 1, **characterized in that** the base of the pot-shaped body before the fine blanking or shaving is fixed by an advancing the fine blanking die or shaving device pilot die and the burr or the shaving chips are led and pressed into the indentation with defined location

3. Method according to claim 1, **characterized in that** the shaving is executed as an at least two-staged operation.

4. Method according to claim 1, **characterized in that** the fine blanking is executed in combination with the shaving.

5. Device for the fabrication of a toothing at a three-dimensional pot-shaped body produced by forming and fine blanking, especially a hinge attachment for car seat components or the like according to claim 1, with a tool for forming teeth into a substantially evenly curved edge of a pot-shaped body having inner forms in its base, wherein the teeth of the toothing radially extend to the inner side of the pot-shaped body, in which the three-dimensional body is fixed between a base plate and a pressure pad, **characterized in that** the tool includes a die **(12)** for fine blanking or shaving, in which is provided a hollow space **(14),** in which is placed a sliding pilot die **15** being effective in the working direction **(AR)** of the die **12,** pressing against the base **(8)** of the pot-shaped body **(1),** which by means of a spring **(18)** is coupled to die **(12)** in a way, that the pilot die **(15)** during its descending movement advances the die **(12)** and between the cut or shaved surface **(21)** of the inner toothing **(2)** and the pilot die **(15)** is created a groove **(22)** for leading the fine blanking burr **(20)** or shaving chips into the recess **(6)** of the body **(1),** wherein the die **(12)** when reaching its lowest position fixes and presses the burr **(20)** and the chips into the recess **(6).**

6. Device according to claim 5, **characterized in that** the spring **(18)** is a compression spring.

7. Device according to claim 5, **characterized in that** between base plate **(9)** and pressure pad **(11)** is placed a distance plate **(10)** the height of which corresponds to the height of the pot-shaped body **(1).**

8. Device according to claim 5, **characterized in that** die **(12)** and pilot die **(15)** have a common axis.

## Revendications

1. Procédé de fabrication d'une cannelure sur un corps à trois dimensions déformé et découpé avec précision, notamment une ferrure pour composants de siège d'automobile ou similaires fabriquée à partir d'une bande droite, dans lequel la bande droite est déformée et découpée avec précision dans un outil de manière à obtenir un corps similaire à un pot dans la base duquel se trouvent des formes intérieures et un bord de courbure essentiellement uniforme, après quoi une cannelure s'étendant dans le corps de manière radiale vers l'intérieur est creusée dans le bord, caractérisant ce que la cannelure dans le bord du corps similaire à un pot est produite exclusivement par découpe ou par raclage au moyen d'un poinçon de découpe de précision ou d'un moyen de raclage et les bavures resp. les copeaux produits lors de la découpe ou du raclage sont pressés d'une manière définie dans une creusure associée à la cannelure dans le fond du corps similaire à un pot.

2. Procédé selon la revendication 1, **caractérisé en ce que** la base de corps du corps similaire à un pot est fixée, avant la découpe de précision ou le raclage, par un poinçon pilote qui précède dans le temps le poinçon de découpe de précision ou le moyen de raclage et les bavures resp. les copeaux sont dirigés dans la creusure dans une position définie en vue du pressage.

3. Procédé selon la revendication 1, **caractérisé en ce que** le raclage est exécuté en tant que processus à au moins deux étapes.

4. Procédé selon la revendication 1, **caractérisé en ce que** la découpe de précision est exécutée en combinaison avec le raclage.

5. Dispositif pour fabriquer une cannelure sur un corps à trois dimensions similaire à un pot, déformé et découpé avec précision, notamment une ferrure d'articulation pour composants de siège d'automobile ou similaires selon la revendication 1, comprenant un outil pour canneler un bord de courbure essentiellement uniforme d'un corps similaire à un pot pourvu de formes intérieures situées dans sa base, les dents de la cannelure s'étendant radialement dans l'intérieur du corps similaire à un pot, dans lequel le corps à trois dimensions est serré entre une plaque de base et une plaque de guidage, **caractérisé en ce que** l'outil comprend un poinçon (12) pour la découpe de précision ou le raclage dans lequel il est prévu une cavité (14) dans laquelle un poinçon pilote (15) agissant dans la direction de travail (AR) du poinçon (12) est disposé de manière à pouvoir effectuer un mouvement coulissant pour appuyer sur la base (8) du corps similaire à un pot (1), lequel poinçon pilote est couplé au poinçon (12) grâce à un moyen de ressort (18) de manière à ce que le poinçon pilote (15) précède le poinçon (12) lors de son mouvement descendant et à ce qu'un canal (22) servant à évacuer les bavures de la découpe de précision (20) ou les copeaux dans la creusure (6) du corps (1) soit formé entre la surface (21) découpée ou raclée de la cannelure intérieure (2) et le poinçon pilote (15), le poinçon (12) immobilisant et pressant les bavures (20) et les copeaux dans la creusure (6) lorsqu'il atteint sa position finale inférieure.

6. Dispositif selon la revendication 5, **caractérisé en ce que** le moyen de ressort (18) est un ressort de pression.

7. Dispositif selon la revendication 5, **caractérisé en ce qu'**une plaque de distance (10) correspondant à la hauteur du corps similaire à un pot (1) est située entre la plaque de base (9) et la plaque de guidage (11).

8. ***Dispositif selon la revendication 5, caractérisé en* ce *que le poinçon (12) et le poinçon pilote (15) ont un axe commun.***
